# EUROPEAN PATENT APPLICATION

(11) **EP 1 334 993 A2**
(43) Date of publication of application: **13.08.2003**
(21) Application number: 03100272.8
(22) Date of filing: 10.02.2003
(51) Int. Cl.: C08J 5/22, H01M 8/10

(54) **Proton conducting membrane, method for producing the same, and fuel cell using the same**

(30) Priority: 12.02.2002 JP 2002034115
(71) Applicant: National Institute of Advanced Industrial Science and Technology, Tokyo 100-8901 (JP); SEKISUI CHEMICAL CO., LTD., Osaka (JP)
(72) Inventor: Honma, Itaru AIST Tsukuba Central 2, Tsukuba-shi Ibaraki-ken, Ibaraki (JP); Sugimoto, Toshiya, Ibaraki-ken, Ibaraki (JP); Nomura, Shigeki, Ibaraki-ken, Ibaraki (JP)
(74) Representative: Courgeon, Antoine

(57) **Abstract**

This invention relates to a proton conducting membrane, excellent in resistance to heat, durability, dimensional stability, flexibility, mechanical strength and fuel barrier characteristics, and showing excellent proton conductivity at high temperature, method for producing the same, and fuel cell using the same.

The present invention provide a proton conducting membrane comprising a three-dimensionally crosslinked structure (A) containing the silicon-oxygen bond, organic structure (B), structure (C) containing amino group and proton conducting agent (D), and a method for producing the same, comprising steps of preparing a mixture of an organic silicone compound (E) having 2 or more hydrolysable silyl groups, organic silicon compound (F) having 1 or more hydrolysable silyl groups and amino group, and proton conducting agent (D) as the first step; forming the above mixture into a film as the second step; and hydrolyzing/condensing the hydrolysable silyl group contained in the mixture formed into the film, to form the three-dimensionally crosslinked structure having the silicon-oxygen bond as the third step.

## Description

### BACKGROUND OF THE INVENTION

### FIELD OF THE INVENTION

This invention relates to a proton (hydrogen ion) conducting membrane, method for producing the same, and fuel cell using the same, more particularly the proton conducting membrane, excellent in resistance to heat, durability, dimensional stability, flexibility, mechanical strength and fuel barrier characteristics, and showing excellent proton conductivity at high temperature, method for producing the same, and fuel cell using the same, and, at the same time, the proton conducting membrane for the direct fuel type fuel cell which is directly supplied with fuel, e.g., methanol, methane or propane, method for producing the same, and fuel cell using the same.

### DESCRIPTION OF THE PRIOR ART

Recently, fuel cell has been attracting attention as a power generating device of the next generation, which can contribute to solution of the problems related to environments and energy, now having been increasingly becoming serious social problems, because of its high power generation efficiency and compatibility with the environments.
Fuel cells generally fall into several categories by electrolyte type. Of these, a polymer electrolyte fuel cell (sometimes referred to as PEFC), being more compact and generating higher output than any other type, is considered to be a leading fuel cell type in the future for various purposes, e.g., small-size on-site facilities, and as movable (e.g., power source of vehicles) and portable applications.

Thus, PEFCs have inherent advantages in principle, and extensively developed for commercialization. PEFCs normally use hydrogen as the fuel. Hydrogen is dissociated into proton (hydrogen ion) and electron in the presence of catalyst provided on the anode side. Of these, the electron is passed to the outside, where it is used as electricity, and circulated back to the system on PEFC's cathode side. On the other hand, the proton is passed to the proton conducting membrane (electrolyte membrane), through which it moves towards the cathode side.
On the cathode side, the proton, electron recycled back from the outside and oxygen supplied from the outside are bonded to each other in the presence of catalyst, to produce water. Thus, a PEFC by itself is a very clean energy source which generates power while it is producing water from hydrogen and oxygen.

Hydrogen to be supplied to a fuel cell is normally produced by an adequate method, e.g., methanol reforming to extract hydrogen. However, the direct fuel type fuel cell has been also extensively developed. It is directly supplied with methanol or the like, from which the proton and electron are produced in the presence of catalyst, where water is normally used together with methanol.

In the fuel cell, the proton conducting membrane is responsible for transferring the proton produced on the anode to the cathode side. As described above, flow of the proton takes place in concert with that of the electron. It is therefore necessary to conduct a sufficient quantity of the proton at high speed, for the PEFC to produce high output (or high current density). Therefore, it is not too much to say that performance of the proton conducting membrane is a key to performance of the PEFC. The proton conducting membrane also works as the insulation film which electrically insulates the anode and cathode from each other and as the fuel barrier membrane which prevents the fuel to be supplied to the anode side from leaking to the cathode side, in addition to transferring the proton.

The proton conducting membranes for the current PEFCs are mainly of fluorine resin-based ones, with a perfluoroalkylene as the main skeleton, and partly with sulfonic acid group at the terminal of the perfluorovinyl ether side chains. Several types of these sulfonated fluorine resin-based membranes have been proposed, e.g., Nafion R membrane (Du Pont, USP 4,330,654), Dow membrane (Dow Chemical, Japanese Patent Application Laid-Open No.4-366137), Aciplex R membrane (Asahi Chemical Industries, Japanese Patent Application Laid-Open No.6-342665), and Flemion R membrane (Asahi Glass).

The fluorine resin-based membrane is considered to have a glass transition temperature (Tg) of around 130°C under a humidified condition. The so-called creep phenomenon occurs as temperature increases from the above level to cause problems, e.g., changed proton conducting structure in the membrane to prevent the membrane from stably exhibiting the proton conducting performance, and modification of the membrane to a swollen morphology, or jelly-like morphology to make it very fragile and possibly cause failure of the fuel cell. Moreover, the sulfonic acid group tends to be eliminated when the membrane of wet morphology is exposed to high temperature, to greatly deteriorate its proton conducting performance.
For these reasons, the maximum allowable temperature for stable operation for extended periods is normally considered to be 80°C.

A fuel cell, depending on the chemical reaction for its working principle, has a higher energy efficiency when it operates at higher temperature. In other words, a fuel cell operating at higher temperature becomes more compact and lighter for the same output. Moreover, a fuel cell operating at high temperature allows to utilize its waste heat for cogeneration to produce power and heat, thus drastically enhancing its total energy efficiency. It is therefore considered that operating temperature of a fuel cell is desirably increased to a certain level, normally to 100°C or higher, in particular 120°C or higher.

The catalyst in service on the anode side may be deactivated by impurities in the hydrogen fuel (e.g., carbon monoxide), a phenomenon known as catalyst poisoning, when it is not sufficiently purified. This is a serious problem which can determine lifetime of the PEFC itself.
It is known that the catalyst poisoning can be avoided when the fuel cell operates at sufficiently high temperature, and the cell is preferably operated at high temperature also from this point of view. Moreover, the active metals for the catalyst itself will not be limited to pure noble metals, e.g., platinum, but can be extended to alloys of various metals, when the fuel cell can operate at sufficiently high temperature. Therefore, operability at high temperature is advantageous also viewed from reducing cost and widening applicable resources.

For the direct fuel type fuel cell, various approaches to extract the proton and electron from the fuel directly and efficiently have been studied. It is a consensus that production of sufficient power is difficult at low temperature, and possible when temperature is increased to, e.g., 150°C or higher.
Thus, operability of PEFCs at high temperature is demanded from various aspects. Nevertheless, however, its operating temperature is limited to 80°C by the heat resistance consideration of the proton conducting membrane, as discussed above at present.

The reaction taking place in a fuel cell is exothermic in nature, by which is meant that temperature within the cell spontaneously increases as the cell starts to work. However, the PEFC must be cooled not to be exposed to high temperature of 80°C or higher, as limited by the resistance of the proton conducting membrane to heat. It is normally cooled by water-cooling system, and the PEFC's bipolar plate is devised to include such a system. This tends to increase size and weight of the PEFC as a whole, preventing it to fully exhibit its inherent characteristics of compactness and lightness. In particular, a water-cooling system as the simplest cooling means is difficult to effectively cool the cell, when its maximum allowable operating temperature is set at 80°C. If it is operable at 100°C or higher, it should be effectively cooled by use of heat of vaporization of water, and water could be recycled for cooling to drastically reduce its quantity, leading to reduced size and weight of the cell. When a PEFC is used as the energy source for a vehicle, the radiator size and cooling water volume could be greatly reduced when the cell is controlled at 100°C or higher than controlled at 80°C. Therefore, the PEFC operable at 100°C or higher, i.e., the proton conducting membrane having a heat resistance of 100°C or higher, is strongly in demand.

As described above, the PEFC operable at higher temperature, i.e., increased heat resistance of the proton conducting membrane, is strongly in demand viewed from various aspects, e.g., power generation efficiency, cogeneration efficiency, cost, resources and cooling efficiency. Nevertheless, however, the proton conducting membrane having a sufficient proton conductivity and resistance to heat has not been developed so far.

With these circumstances as the background, a variety of heat-resistant proton conducting membrane materials have been studied and proposed to increase operating temperature of PEFCs.
Some of more representative ones are heat-resistant aromatic-based polymers to replace the conventional fluorine-based membranes. These include polybenzimidazole (Japanese Patent Application Laid-Open No.9-110982), polyether sulfone (Japanese Patent Application Laid-Open Nos.10-21943 and 10-45913), and polyetheretherketone (Japanese Patent Application Laid-Open No.9-87510).
These aromatic-based polymers have an advantage of limited structural changes at high temperature. However, many of them have the aromatic structure directly incorporated with sulfonic acid or carboxylic acid group. They tend to suffer notable desulfonation or decarboxylation at high temperature, and unsuitable for the membranes working at high temperature.

Moreover, many of these aromatic-based polymers have no ion-channel structure, as is the case with fluorine resin-based membranes. As a result, the membranes of these polymers tend to be notably swollen as a whole in the presence of water, causing various problems, e.g., high possibility of separation of the membrane from the electrode joint and broken membrane due to the stress produced at the joint in the membrane-electrode assembly, resulting from the dry and wet conditional cycles which change the membrane size, and possibility of deteriorated strength of the water-swollen membrane, leading to its failure. In addition, each of the aromatic polymers is very rigid in a dry condition, possibly causing damages and other problems while the membrane-electrode assembly is formed.

On the other hand, the following inorganic materials have been proposed as the proton conducting materials. For example, Minami et al. incorporate a variety of acids in hydrolysable silyl compounds to prepare inorganic proton conducting materials (Solid State Ionics, 74 (1994), pp.105). They stably show proton conductivity at high temperature, but involve several problems; e.g., they tend to be cracked when made into a thin film, and difficult to handle and make them into a membrane-electrode assembly.

Several methods have been proposed to overcome these problems. For example, the proton conducting material is crushed to be mixed with an elastomer (Japanese Patent Application Laid-Open No.8-249923) or with a polymer containing sulfonic acid group (Japanese Patent Application Laid-Open No.10-69817). However, these methods have their own problems. For example, the polymer as the binder for each of these methods is merely mixed with an inorganic crosslinked compound, and has basic thermal properties not much different from those of the polymer itself, with the result that it undergoes structural changes in a high temperature range, failing to stably exhibit proton conductivity, and its proton conductivity is generally not high.

A number of R & D efforts have been made for various electrolyte membranes to solve these problems involved in the conventional PEFCs. None of them, however, have succeeded in developing proton conducting membranes showing sufficient durability at high temperature (e.g., 100°C or higher) and satisfying the mechanical and other properties.

In the direct methanol type fuel cell (sometimes referred to as DMFC) which works on methanol as the fuel in place of hydrogen, on the other hand, methanol directly comes into contact with the membrane. The sulfonated fluorine resin-based membrane, e.g., Nafion(TM) membrane, now being used has a strong affinity for methanol, possibly causing problems which can lead to failure of the fuel cell when it absorbs methanol, e.g., swelling to a great extent and dissolution in methanol in some cases. Crossover of methanol to the oxygen electrode side can greatly reduce cell output. These problems are common also with the electrolyte membranes containing an aromatic ring. Therefore, the membranes developed so far are neither efficient nor durable also for DMFCs.

### SUMMARY OF THE INVENTION

It is an object of the present invention to provide a proton conducting membrane, excellent in resistance to heat, durability, dimensional stability, flexibility, mechanical strength and fuel barrier characteristics, showing excellent proton conductivity at high temperature, and, at the same time, applicable to a direct fuel type fuel cell directly supplied with fuel, e.g., methanol, methane or propane, which can solve the problems involved in the conventional PEFCs. It is another object of the present invention to provide a method for producing the same. It is still another object of the present invention to provide a fuel cell using the same.

The inventors of the present invention have found, after having extensively studied a variety of electrolyte membrane materials to solve the above problems, that an innovative organic/inorganic composite membrane unprecedentedly excellent in resistance to heat and durability, showing excellent proton conductivity even at high temperature, and satisfying various properties, e.g., flexibility and other mechanical properties, can be obtained by including, as the essential components for the proton conducting membrane, a selected combination of specific organic material, three-dimensionally crosslinked structure containing a specific silicon-oxygen bond bound to the above organic material and proton conducting agent, on account of the proton conducting membrane network structure formed by these components, achieving the present invention.

The first invention is a proton conducting membrane, comprising a three-dimensionally crosslinked structure (A) containing the silicon-oxygen bond, organic structure (B), structure (C) containing amino group and proton conducting agent (D), wherein
(i) the organic structure (B) has at least 2 carbon atoms bonded to each other in the main chain,
(ii) the structure (C) containing amino group has at least one amino group, and
(iii) the three-dimensionally crosslinked structure (A), organic structure (B) and structure (C) containing amino group are bonded to each other via a covalent bond.

The second aspect of the present invention is the proton conducting membrane of the first aspect, wherein the organic structure (B) and three-dimensionally crosslinked structure (A) are bonded to each other via 2 or more covalent bonds.

The third aspect of the present invention is the proton conducting membrane of the first aspect, wherein the organic structure (B) consists of carbon and hydrogen.

The fourth aspect of the present invention is the proton conducting membrane of the first aspect, wherein the main skeleton section of the organic structure (B) has a structure represented by the chemical formula (1).

-(CH₂)ₙ- (1)

(wherein, "n" is an integer of 2 to 20).

The fifth aspect of the present invention is the proton conducting membrane of the first aspect, wherein the main skeleton section of the organic structure (B) has a structure represented by the chemical formula (2).

-(CH₂)ₘ-{Ar}-(CH₂)ₘ- (2)

(wherein, "m" is an integer of 0 to 10; and Ar is an arylene structure of 6 to 30 carbon atoms).

The sixth aspect of the present invention is the proton conducting membrane of the first aspect, wherein the structure (C) containing amino group and three-dimensionally crosslinked structure (A) are bonded to each other via 1 or more covalent bonds.

The seventh aspect of the present invention is the proton conducting membrane of the first aspect, wherein the main skeleton section of the structure (C) containing amino group has a hydrocarbon structure with at least one amino group and the other portion consisting of carbon and hydrogen.

The eighth aspect of the present invention is the proton conducting membrane of the first aspect, wherein the structure (C) containing amino group has at least one structure selected from the group consisting of those represented by the chemical formulae (3) and (4):

-(CH₂)ₐ-(NH-(CH₂)_{b})_{c}-NH-(CH₂)ₐ- (3)

(wherein, "a" is an integer of 1 to 12; "b" is an integer of 1 to 12; and "c" is an integer of 0 to 5), and

-(CH₂)ₐ-(NH-(CH₂)_{b})_{c}-NR¹R² (4)

(wherein, "a" is an integer of 1 to 12; "b" is an integer of 1 to 12; "c" is an integer of 0 to 5; and R¹ and R² are each selected from the group consisting of hydrogen atom, an alkyl group of 1 to 12 carbon atoms and aryl group of 1 to 12 carbon atoms).

The ninth aspect of the present invention is the proton conducting membrane of the first aspect, wherein the proton conducting agent (D) is an acid.

The tenth aspect of the present invention is the proton conducting membrane of the ninth aspect, wherein the proton conducting agent (D) is a heteropolyacid.

The 11^{th} aspect of the present invention is the proton conducting membrane of the tenth aspect, wherein the heteropolyacid is at least one type of compound selected from the group consisting of phosphotungstic acid, phosphomolybdic acid and silicotungstic acid.

The 12^{th} aspect of the present invention is the proton conducting membrane of the first aspect, wherein the structure (C) containing amino group is incorporated at 0.01 to 1 equivalent per equivalent of the organic structure (B).

The 13^{th} aspect of the present invention is the proton conducting membrane of the first aspect, wherein the proton conducting agent (D) is incorporated at 0.01 to 3 equivalents per equivalent of the three-dimensionally crosslinked structure (A), organic structure (B) and structure (C) containing amino group totaled, and at least per equivalent of the structure (C) containing amino group.

The 14^{th} aspect of the present invention is a method for producing the proton conducting membrane of one of the first to 13^{th} aspect, comprising steps of preparing a mixture of an organic silicone compound (E) having 2 or more hydrolysable silyl groups, organic silicon compound (F) having 1 or more hydrolysable silyl groups and amino group, and proton conducting agent (D) as the first step; forming the above mixture into a film as the second step; and hydrolyzing/condensing the hydrolysable silyl group contained in the mixture formed into the film, to form the three-dimensionally crosslinked structure having the silicon-oxygen bond as the third step.

The 15^{th} aspect of the present invention is the method of the 14^{th} aspect for producing the proton conducting membrane, wherein the organic silicone compound (E) having 2 or more hydrolysable silyl groups is a compound represented by the chemical formula (5): 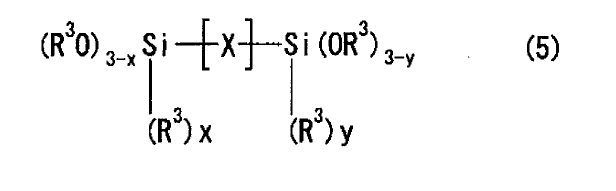 (wherein, R³ is a group selected from the group consisting of methyl, ethyl, propyl and phenyl, R³s being the same or different; X is a group represented by the chemical formula (1) or (2), Xs being the same or different; and "x" and "y" are each 0 or 1, and may be the same or different).

The 16^{th} aspect of the present invention is the method of the 14^{th} aspect for producing the proton conducting membrane, wherein the organic silicon compound (F) having 1 or more hydrolysable silyl groups and amino group is at least one compound selected from those represented by the chemical formulae (6) and (7): 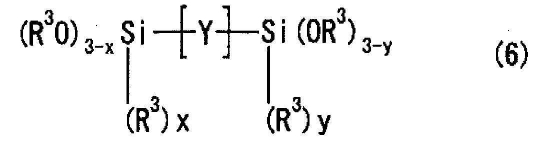 (wherein, R³ is a group selected from the group consisting of methyl, ethyl, propyl and phenyl, R³s being the same or different; Y is a group represented by the chemical formula (3); and "x" and "y" are each 0 or 1, and may be the same or different), 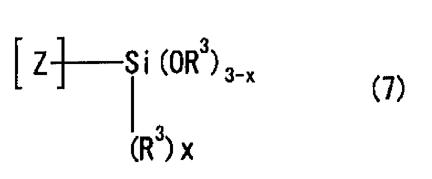 (wherein, R³ is a group selected from the group consisting of methyl, ethyl, propyl and phenyl, R³s being the same or different; Z is a group represented by the chemical formula (4); and "x" is 0 or 1, and may be the same or different).

The 17^{th} aspect of the present invention is the method of the 14^{th} aspect for producing the proton conducting membrane, wherein the mixture is incorporated with water (G).

The 18^{th} aspect of the present invention is the method of the 14^{th} aspect for producing the proton conducting membrane, wherein the third step is followed by a new step as the fourth step in which the mixture formed into a film is cured at 100 to 300°C.

The 19^{th} aspect of the present invention is a fuel cell which uses the proton conducting membrane of one of the first to 13^{th} aspect.

### DETAILED DESCRIPTION OF THE INVENTION

The proton conducting membrane, method for producing the same, and fuel cell using the same of present invention are described in detail for each aspect.

### 1. Three-dimensionally crosslinked silicon-oxygen structure (A)

The three-dimensionally crosslinked silicon-oxygen structure (A) for the present invention is a component serving as the main skeleton for the proton conducting membrane of the present invention, where a number of the silicon-oxygen bond units are bonded to each other three-dimensionally. It allows the proton conducting membrane to exhibit resistance to heat, durability, dimensional stability and fuel barrier characteristics, on account of the very high silicon/oxygen bond energy, coupled with its dense network structure, and hence to exhibit excellent performance at 100 to 150°C as the high temperature working temperature required for fuel cells.
The conventional proton conducting membranes which use a non-cured type resin, e.g., thermoplastic fluorine-based resin, suffer undesired phenomena, e.g., softening or creeping, so long as they include a non-crosslinked resin. These phenomena may cause modification or structural changes of the resin to deteriorate performance of the membrane, when it is used at high temperature.

On the other hand, the proton conducting membrane of the present invention has much improved heat resistance, because these undesired phenomena are substantially controlled in the presence of the three-dimensionally crosslinked silicon-oxygen structure (A) in the thermosetting resin.
For example, a sulfonated fluorine resin, as a most commonly used resin for a direct methanol fuel cell in which methanol is directly used as the fuel without being reformed, may be swollen by or dissolved in hot methanol, when the cell operates at high temperature, leading not only to deteriorated performance but also to eventual failure of the cell. By contrast, the proton conducting membrane of the present invention, which incorporates the three-dimensionally crosslinked silicon-oxygen structure (A), satisfactorily works at high temperature, because the resin is swollen to a limited extent and rarely dissolved in methanol.

The three-dimensionally crosslinked silicon-oxygen structure (A) can be synthesized by the sol-gel process, described below, with an organic silicone compound (E) having 2 or more hydrolysable silyl groups and organic silicon compound (F) having 1 or more hydrolysable silyl groups as the starting compounds.
The three-dimensionally crosslinked silicon-oxygen structure (A) comprises the three-dimensionally crosslinked organic silicone compound (E) having 2 or more hydrolysable silyl groups and organic silicon compound (F) having 1 or more hydrolysable silyl groups, with the alkoxy-containing silicon segment in one compound crosslinked with the adjacent alkoxy-containing silicon segment in the other compound by dehydrocondensation.

### 2. Organic structure (B)

The organic structure (B) is one component for the proton conducting membrane of the present invention, present between the three-dimensionally crosslinked silicon-oxygen structures (A), and having at least 2 carbon atoms connected to each other and characterized by the structure represented by the chemical formula (1) or (2):

- (CH₂)ₙ- (1)

(wherein, "n" is an integer of 2 to 20).

The compound represented by the chemical formula (1) is bonded to the three-dimensionally crosslinked silicon-oxygen structures (A) at both ends of the methylene chain, wherein the numeral "n" representing number of the methylene chains is preferably 1 to 20, more preferably 2 to 18, particularly preferably 4 to 14. The membrane may be fragile when "n" is 1, and the effect of the three-dimensionally crosslinked silicon-oxygen structure (A) for improving heat resistance may be diminished when "n" exceeds 20. More specifically, those useful for the present invention include straight-chain or branched paraffins of chain CH2 structure, e.g., methane, ethane, propane, butane, pentane, hexane, heptane, octane, nonane, decane, undecane, dodecane, tridecane, tetradecane, pentadecane, hexadecane, heptadecane, octadecane, nonadecane, eicosane and isomers thereof. On the other hand, when number of the (A)-(B) bonds is 2 and an unsaturated hydrocarbon serves as the main skeleton section, a compound represented by the chemical formula (2) is preferable.

-(CH₂)ₘ-{Ar}-(CH₂)ₘ- (2)

(wherein, "m" is an integer of 0 to 10; and Ar is an arylene structure of 6 to 30 carbon atoms).

The compound represented by the formula (2) has an arylene structure containing an aromatic ring. It may be bonded to the three-dimensionally crosslinked silicon-oxygen structure (A) via its alkylene ring (in this case, "m" is preferably 1 to 10, particularly preferably 1 to 6) or directly (in this case, "m" is 0). The site at which the aromatic ring is substituted is not limited. It may be ortho, meta, para or a mixture thereof. The specific arylene structure examples include benzene, biphenyl, terphenyl, quarterphenyl, a naphthalene derivative, anthracene derivative, pyrene derivative, acenaphthylene derivative, fluorene derivative, phenanthrene derivative, perylene derivative, and substitute thereof.
The proton conducting membrane of the present invention should be sufficiently soft and flexible for ease of handling the membrane itself and of fabrication of the membrane/electrode assembly, and for allowing itself to follow expansion of the fuel cell working at high temperature. The organic structure (B) provides the above characteristics for the proton conducting membrane of the present invention.

Length of the organic structure (B) cannot be specified, because it depends on various factors, e.g., branching of the molecular chain, flexibility of the bond and presence or absence of the ring structure. In the bond of the carbon-carbon methylene chain, number of the carbon atoms is preferably around 1 to 20, more preferably 2 to 18, particularly preferably 4 to 14.
The chain having 1 to 3 carbon bonds, although useful, may give the fragile membrane. On the other hand, the chain having an excessive length is undesirable, because it may block the ion conduction path to decrease conductivity.
The organic structure (B) is a low-molecular-weight hydrocarbon compound, e.g., a paraffin, when it is present in a free state, i.e., not bonded to the three-dimensionally crosslinked silicon-oxygen structure (A) or structure (C) containing amino group, both being the constituents of the proton conducting membrane of the present invention. Therefore, it is gaseous or liquid, or dissolved at high temperature, and hence inapplicable to a proton conducting membrane working at high temperature, because it will be released out of the fuel cell system at its working temperature.
When the three-dimensionally crosslinked silicon-oxygen structure (A) is bonded to the organic structure (B) via only one bond, degree of crosslinking may be insufficient to have a sufficient membrane strength, and the proton conducting phase-separated structure may be easily broken. Therefore, they are preferably bonded to each other via 2 or more bonds.
On the other hand, the membrane with these components bonded to each other via 3 or more bonds is not preferable, because of limited material availability, and possibly excessive crosslinking density which causes excessive hardness and deteriorated softness. Therefore, the preferable bond number is 2.

### 3. Structure (C) containing amino group

The structure (C) containing amino group for the present invention is one component of the proton conducting membrane of the present invention, and has a hydrocarbon structure with at least one amino group and the other portion consisting of carbon and hydrogen. It is present between the three-dimensionally crosslinked silicon-oxygen structures (A) or between the three-dimensionally crosslinked silicon-oxygen structure (A) and organic structure (B), while being chemically bonded to them, or directly bonded to the three-dimensionally crosslinked silicon-oxygen structure (A). It is necessarily to have at least one structure selected from the group consisting of those represented by the chemical formulae (3) and (4):

-(CH₂)ₐ-(NH-(CH₂)_{b})_{c}-NH-(CH₂)ₐ- (3)

(wherein, "a" is an integer of 1 to 12; "b" is an integer of 1 to 12; and "c" is an integer of 0 to 5), and

-(CH₂)ₐ-(NH-(CH₂)_{b})_{c}-NR¹R² (4)

(wherein, "a" is an integer of 1 to 12; "b" is an integer of 1 to 12; "c" is an integer of 0 to 5; and R¹ and R² are each selected from the group consisting of hydrogen atom, an alkyl group of 1 to 12 carbon atoms and aryl group of 1 to 12 carbon atoms).

The examples of the structures containing amino group, represented by the formula (3), include those represented by the chemical formulae (8) and (9):

-(CH₂)₃-NH-(CH₂)₃- (8)

-(CH₂)₃-NH-(CH₂)₂-NH-(CH₂)₃- (9)

The examples of the structures containing amino group, represented by the formula (4), include those represented by the chemical formulae (10) to (12):

-(CH₂)₃NH₂ (10)

-(CH₂)₃NH(CH₂)₂NH₂ (11)

-(CH₂)₃NH(CH₂)₂NH(CH₂)₂NH₂ (12)

The structure (C) containing amino group for the present invention is incorporated to realize proton conductivity by the interactions of its amino group with the proton conducting agent (D), described later, in the proton conducting membrane.
The structure (C) containing amino group for the present invention can possibly have a structure similar to the organic structure (B). It is therefore sufficiently soft and flexible for ease of handling the membrane and of fabrication of the membrane/electrode assembly, and for allowing the membrane to follow expansion of the fuel cell working at high temperature.
Length of the organic structure (C) containing amino group cannot be specified, because it depends on various factors, e.g., branching of the molecular chain, flexibility of the bond and presence or absence of the ring structure. In the bond of the carbon-carbon methylene chain, number of the carbon atoms is preferably around 1 to 20, particularly preferably 4 to 14.
The chain having 1 to 3 carbon bonds, although useful, may give the fragile membrane. On the other hand, the chain having an excessive length is undesirable, because it may block the ion conduction path to decrease conductivity.

The structure (C) containing amino group is a low-molecular-weight amino group or amino-containing hydrocarbon compound, e.g., a paraffin, when it is present in a free state, i.e., not bonded to the three-dimensionally crosslinked silicon-oxygen structure (A) or organic structure (B), both being the constituents of the proton conducting membrane of the present invention. Therefore, it is gaseous or liquid, or dissolved at high temperature, and hence inapplicable to a proton conducting membrane working at high temperature, because it will be released out of the fuel cell system at its working temperature.
When the three-dimensionally crosslinked silicon-oxygen structure (A) is bonded to the structure (C) containing amino group via only one bond, degree of crosslinking may be insufficient to have a sufficient membrane strength, and the proton conducting phase-separated structure may be easily broken. Therefore, they are preferably bonded to each other via 2 or more bonds.
On the other hand, the membrane with these components bonded to each other via 3 or more bonds is not preferable, because of limited material availability, and possibly excessive crosslinking density which causes excessive hardness and deteriorated softness. Therefore, the preferable bond number is 2.
However, when the organic structure (B) is present at a high content, the structure (C) containing amino group may be bonded to the three-dimensionally crosslinked silicon-oxygen structure (A) via only one bond, because it may be incorporated only to realize proton conductivity by interacting with the proton conducting agent (D).
The structure (C) containing amino group is incorporated preferably at 0.01 to 1 equivalent per equivalent of the organic structure (B).
At below 0.01 equivalents, the structure (C) containing amino group may not have sufficient capacity of interacting with the proton conducting agent (D). At above 1 equivalent, on the other hand, the proton conducting membrane may have insufficient heat resistance or mechanical strength and also may be swollen with water or methanol. Thus, lack of reliability over extended periods, an inherent disadvantage involved in polar group, may become obvious.

### 4. Proton conducting agent (D)

The proton conducting agent (D) for the present invention is responsible for increasing proton concentration in the proton conducting membrane. Increased proton concentration is essential for realization of high proton conductivity for the present invention, in consideration of proton conductivity increasing in proportion to concentrations of proton and the proton conducting medium (generally of water supplied separately).

The so-called protonic acid compound, which releases the proton, is used as the proton conducting agent (D). Types of acid as the proton conducting agent (D) include phosphoric, sulfuric, sulfonic, carboxylic, boric and heteropolyacid, and a derivative thereof. These acids may be used either individually or in combination for the present invention. Of these, a heteropolyacid is more preferable, where heteropolyacid is a generic term for inorganic oxo acids, of which those of Keggin or Dawson structure, e.g., phosphotungstic, phosphomolybdic and silicotungstic acid are more preferable.

These heteropolyacids have sufficiently large molecular sizes to control elution of the acid out of the membrane to a considerable extent, even in the presence of water or the like. Moreover, heteropolyacids efficiently promote interactions of the structure (C) containing amino group to increase conductivity and, at the same time, are retained in the membrane to control elution of the acid out of the membrane. As such, they are especially suitable for proton conducting membranes which work at high temperature for extended periods. Of the inorganic solid acids, phosphotungstic, phosphomolybdic and silicotungstic acid are especially preferable in consideration of their high acidity, large size and magnitude of the polarity interactions with the amino group. In the present invention, the heteropolyacid may be used in combination with another acid as the proton conducting agent (D), and may be used in combination with 2 or more organic or inorganic acids.

The proton conducting agent (D) is incorporated preferably at 1 equivalent or more per equivalent of the structure (C) containing amino group. It is expected to work also as the curing catalyst in production process, described later, in which the curing reaction is utilized. When it is incorporated at 1 equivalent or less per equivalent of the structure (C) containing amino group, it will be totally consumed for the interactions to hinder the curing reaction.
Moreover, the proton conducting agent (D) is incorporated preferably at 0.01 to 3 equivalents per equivalent of the three-dimensionally crosslinked silicon-oxygen structure (A), organic structure (B) and structure (C) containing amino group totaled.
At below 0.01 equivalents, it may not sufficiently realize proton conductivity. At above 3 equivalents, on the other hand, it may damage the membrane properties, and may not be sufficiently retained by the three-dimensionally crosslinked silicon-oxygen structure (A), organic structure (B) and structure (C) containing amino group to be released out of the membrane.

### 5. Organic silicone compound (E) having 2 or more hydrolysable silyl groups

In the present invention, the organic silicone compound (E) having 2 or more hydrolysable silyl groups is one of the starting compounds for the proton conducting membrane of the present invention. It is crosslinked by the sol-gel process into the three-dimensionally crosslinked silicon-oxygen structure (A) or organic structure (B).
The organic silicone compound (E) having 2 or more hydrolysable silyl groups is a compound represented by the chemical formula (5): 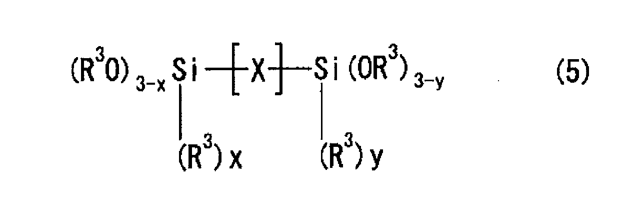 (wherein, R³ is a group selected from the group consisting of methyl, ethyl, propyl and phenyl, R³s being the same or different; X is a group represented by the chemical formula (1) or (2), Xs being the same or different; and "x" and "y" are each 0 or 1, and may be the same or different).
It is a bis(alkylalkoxysilane) hydrocarbon having a divalent organic structure represented by -(CH₂)ₙ- or -(CH₂)ₘ-{Ar)-(CH₂)ₘ-, which can provide adequate flexibility and gas or ion transmittance for the proton conducting membrane of the present invention.

The specific examples of the compounds represented by the chemical formula (5) include bis(triethoxysilyl)ethane, bis(triethoxysilyl)butane, bis(triethoxysilyl)hexane, bis(triethoxysilyl)octane, bis(triethoxysilyl)nonane, bis(triethoxysilyl)decane, bis(triethoxysilyl)dodecane, bis(trimethoxysilyl)tetradecane, bis(trimethoxysilyl)ethane, bis(trimethoxysilyl)butane, bis(trimethoxysilyl)hexane, bis(trimethoxysilyl)octane, bis(trimethoxysilyl)nonane, bis(trimethoxysilyl)decane, bis(trimethoxysilyl)dodecane, bis(trimethoxysilyl)tetradodecane, bis(methyldiethoxysilyl)ethane, bis(methyldiethoxysilyl)butane, bis(methyldiethoxysilyl)hexane, bis(methyldiethoxysilyl)octane, bis(methyldiethoxysilyl)nonane, bis(methyldiethoxysilyl)decane, bis(methyldiethoxysilyl)dodecane, bis(methyldiethoxysilyl)tetradodecane, bis(methyldimethoxysilyl)ethane, bis(methyldimethoxysilyl)butane, bis(methyldimethoxysilyl)hexane, bis(methyldimethoxysilyl)octane, bis(methyldimethoxysilyl)nonane, bis(methyldimethoxysilyl)decane, bis(methyldimethoxysilyl)dodecane, bis(methyldimethoxysilyl)tetradodecane, bis(dimethylethoxysilyl)ethane, bis(dimethylethoxysilyl)butane, bis(dimethylethoxysilyl)hexane, bis(dimethylethoxysilyl)octane, bis(dimethylethoxysilyl)nonane, bis(dimethylethoxysilyl)decane, bis(dimethylethoxysilyl)dodecane, bis(dimethylethoxysilyl)tetradodecane, bis(dimethylmethoxysilyl)ethane, bis(dimethylmethoxysilyl)butane, bis(dimethylmethoxysilyl)hexane, bis(dimethylmethoxysilyl)octane, bis(dimethylmethoxysilyl)nonane, bis(dimethylmethoxysilyl)decane, bis(dimethylmethoxysilyl)dodecane, bis(dimethylmethoxysilyl)tetradodecane, bis(methyldimethoxysilyl)benzene, bis(methyldiethoxysilyl)benzene, bis(ethyldimethoxysilyl)benzene, bis(ethyldiethoxysilyl)benzene, bis(dimethylmethoxysilyl)benzene, bis(dimethylethoxysilyl)benzene, bis(diethylmethoxysilyl)benzene, bis(diethylethoxysilyl)benzene, bis(trimethoxysilyl)benzene, and bis(triethoxysilyl)benzene.

### 6. Organic silicon compound (F) having 1 or more hydrolysable silyl groups and amino group

In the present invention, the organic silicon compound (F) having 1 or more hydrolysable silyl groups and amino group is one of the starting compounds for the proton conducting membrane of the present invention. It is crosslinked by the sol-gel process into the three-dimensionally crosslinked silicon-oxygen structure (A) or the structure (C) containing amino group.
The organic silicon compound (F) having 1 or more hydrolysable silyl groups and amino group is at least one compound selected from those represented by the chemical formulae (6) and (7), having, in the molecule, a divalent group represented by -(CH₂)ₐ-(NH-(CH₂)_{b})_{c}-NH-(CH₂)ₐ- or monovalent group represented by -(CH₂)ₐ-(NH-(CH₂)_{b})_{c}-NR¹R². The amino group interacts with the proton conducting agent (D) to realize proton conductivity, and the hydrocarbon segment can provide adequate flexibility and gas or ion permeability for the proton conducting membrane of the present invention. 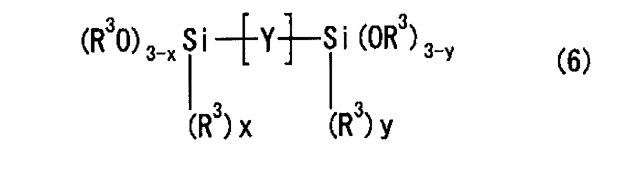 (wherein, R³ is a group selected from the group consisting of methyl, ethyl, propyl and phenyl, R³s being the same or different; Y is a group represented by the chemical formula (3); and "x" and "y" are each 0 or 1, and may be the same or different), 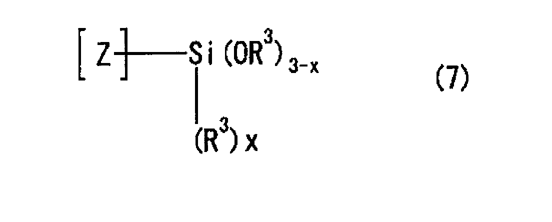 (wherein, R³ is a group selected from the group consisting of methyl, ethyl, propyl and phenyl, R³s being the same or different; Z is a group represented by the chemical formula (4); and "x" is 0 or 1).

The specific examples of the compounds represented by the chemical formula (6) include:
bis(triethoxysilylpropyl)amine, bis(methyldiethoxysilylpropyl)amine, bis(dimethylethoxysilylpropyl)amine, bis(trimethoxysilylpropyl)amine, bis(methyldimethoxysilylpropyl)amine, bis(dimethylmethoxysilylpropyl)amine bis [(3-trimethoxysilyl)propyl]ethylenediamine, N,N'-bis[(3-trimethoxysilyl)propyl]ethylenediamine, bis(triethoxysilylpropyl)ethylenediamine, bis(triethoxysilylpropyl)tetramethylenediamine, bis(triethoxysilylpropyl)hexamethylenediamine, bis(triethoxysilylpropyl)octamethylenediamine, bis(triethoxysilylpropyl)nonamethylenediamine, bis(triethoxysilylpropyl)decamethylenediamine, bis(triethoxysilyl)dodecamethylenediamine, bis(trimethoxysilylpropyl)tetradodecamethylenediamine, bis(trimethoxysilylpropyl)ethylenediamine, bis(trimethoxysilylpropyl)tetramethylenediamine, bis(trimethoxysilylpropyl)hexamethylenediamine, bis(trimethoxysilylpropyl)octamethylenediamine, bis(trimethoxysilylpropyl)nonamethylenediamine, bis(trimethoxysilylpropyl)decamethylenediamine, bis(trimethoxysilylpropyl)dodecamethylenediamine, bis(trimethoxysilylpropyl)tetradodecamethylenediamine, bis(methyldiethoxysilylpropyl)ethylenediamine, bis(methyldiethoxysilylpropyl)trimethylenediamine, bis(methyldiethoxysilylpropyl)hexamethylenediamine, bis(methyldiethoxysilylpropyl)octamethylenediamine, bis(methyldiethoxysilylpropyl)nonamethylenediamine, bis(methyldiethoxysilylpropyl)decamethylenediamine bis(methyldiethoxysilylpropyl)dodecamethylenediamine, bis(methyldiethoxysilylpropyl)tetradodecamethylenediamine, bis(methyldimethoxysilylpropyl)ethylenediamine, bis(methyldimethoxysilylpropyl)trimethyldiamine, bis(methyldimethoxysilylpropyl)hexamethylenediamine, bis(methyldimethoxysilylpropyl)octamethylenediamine, bis(methyldimethoxysilylpropyl)nonamethylenediamine, bis(methyldimethoxysilylpropyl)decamethylenediamine, bis(methyldimethoxysilylpropyl)dodecamethylenediamine, bis(methyldimethoxysilylpropyl)tetradodecamethylenediamine, bis(dimethylethoxysilylpropyl)ethylenediamine, bis(dimethylethoxysilylpropyl)trimethylenediamine, bis(dimethylethoxysilylpropyl)hexamethylenediamine, bis(dimethylethoxysilylpropyl)octamethylenediamine, bis(dimethylethoxysilylpropyl)nonamethylenediamine, bis(dimethylethoxysilylpropyl)decamethylenediamine, bis(dimethylethoxysilylpropyl)dodecamethylenediamine, bis(dimethylethoxysilylpropyl)tetradodecamethylenediamine, bis(dimethylmethoxysilylpropyl)ethylenediamine, bis(dimethylmethoxysilylpropyl)trimethylenediamine, bis(dimethylmethoxysilylpropyl)hexamethylenediamine, bis(dimethylmethoxysilylpropyl)octamethylenediamine, bis(dimethylmethoxysilylpropyl)nonamethylenediamine, bis(dimethylmethoxysilylpropyl)decamethylenediamine, bis(dimethylmethoxysilylpropyl)dodecamethylenediamine, bis(dimethylmethoxysilylpropyl)tetradodecamethylenediamine, bis(methyldimethoxysilylpropyl)p-phenylenediamine, bis(methyldiethoxysilylpropyl)p-phenylenediamine, bis(ethyldimethoxysilylethyl)p-phenylenediamine, bis(ethyldiethoxysilylpropyl)p-phenylenediamine, bis(dimethylmethoxysilylpropyl)p-phenylenediamine, bis(dimethylethoxysilylpropyl)p-phenylenediamine, bis(methyldimethoxysilylpropyl)4,4'-diaminodiphenylamine, bis(methyldiethoxysilylpropyl)4,4'-diaminodiphenylamine, bis(ethyldimethoxysilylethyl)4,4'-diaminodiphenylamine, bis(ethyldimethoxysilylpropyl)4,4'-diaminodiphenylamine, bis(dimethylmethoxysilylpropyl)4,4'-diaminodiphenylamine, bis(dimethylethoxysilylpropyl)4,4'-diaminodiphenylamine, bis(methyldimethoxysilylpropyl)4,4'-diaminodiphenyl ether, bis(methyldiethoxysilylpropyl)4,4'-diaminodiphenyl ether, bis(ethyldimethoxysilylethylpropyl)4,4'-diaminodiphenyl ether, bis(ethyldiethoxysilylpropyl)4,4'-diaminodiphenyl ether, bis(dimethylmethoxysilylpropyl)4,4'-diaminodiphenyl ether, and bis(dimethylethoxysilylpropyl)4,4'-diaminodiphenyl ether.

The specific examples of the compounds represented by the chemical formula (7) include:
3-(N-allylamino)propyltrimethoxysilane, 4-aminobytyltriethoxysilane, N- (2-aminoethyl) - 3-aminoisobutylmethyldimethoxysilane, (aminoethylaminomethyl)phenetyltrimethoxysilane, N-(2-aminoethyl)-3-aminopropylmethyldiethoxysilane, N-(2-aminoethyl)-3-aminopropyltrimethoxysilane, N-(6-aminoethyl)aminopropyltriethoxysilane, N-(2-aminoethyl)-11-aminoundecyltrimethoxysilane, 3-(m-aminophenoxy)propyltrimethoxysilane, m-aminophenyltrimethoxysilane, p-aminophenyltrimethoxysilane, o-aminophenyltrimethoxysilane, 3-(3-aminopropyl)-3,3-dimethyl-1-propenyltrimethoxysilane, 3-aminopropyldiisopropylethoxysilane, 3-aminopropyltrimethoxysilane, 3-aminopropyltriethoxysilane, diethylaminomethyltriethoxysilane, (N,N-diethyl-3-aminopropyl)trimethoxysilane, (N,N-dimethylaminopropyl)trimethoxysilane, N-ethylaminoisobutyltrimethoxysilane, N-(hydroxyethyl)-N-methylaminopropyltrimethoxysilane, N-methylaminopropylmethyldimethoxysilane, N-methylaminopropyltrimethoxysilane, N-phenylaminopropyltrimethoxysilane, and (3 -trimethoxysilylpropyl)diethylenetriamine.
In the present invention, the compounds represented by the chemical formula (7) are not limited to those represented by the chemical formula (7). For example, they may be partly unsaturated or contain an isomer, or also may be partly substituted by hydroxyl or another functional substituent.

### 7. Process for producing the proton conducting membrane

The proton conducting membrane of the present invention can be produced by several processes, e.g., 1) to 3) described below.
1) This process comprises 3 steps; the first step mixes the organic silicone compound (E) having 2 or more hydrolysable silyl groups and organic silicon compound (F) having 1 or more hydrolysable silyl groups and amino group, both having at least one substituent (e.g., hydrolysable silyl group) capable of forming the three-dimensionally crosslinked structure (A) containing the silicon-oxygen bond, with the proton conducting agent (D) to produce the mixture; the second step makes the above mixture into a film by a known method; and the third step hydrolyzes/condenses the substituent (e.g., hydrolysable silyl group) capable of forming the three-dimensional crosslinked structure (A) containing a silicon-oxygen bond (the so-called sol-gel process), to form the three-dimensional crosslinked structure (A) and produce the objective proton conducting membrane therefrom.
2) This process prepares a reaction system containing the organic silicone compound (E) having 2 or more hydrolysable silyl groups and organic silicon compound (F) having 1 or more hydrolysable silyl groups and amino group, both having at least one substituent (e.g., hydrolysable silyl group) capable of forming the three-dimensionally crosslinked structure (A) containing the silicon-oxygen bond; makes the above reaction system into a film by a known method; forms the three-dimensional crosslinked structure (A) in the film by the sol-gel process in the presence of water or its vapor; and brings the resultant film into contact with the solution containing the proton conducting agent (D) to incorporate it into the film, to produce the objective proton conducting membrane.
3) This process produces a film from the three-dimensional crosslinked structure (A) containing a silicon-oxygen bond having a group capable of being bound to the organic structure (B) and structure (C) containing amino group via a covalent bond (for example, group having an unsaturated bond, e.g., vinyl group, or functional group capable of being bound to another compound via a covalent bond, e.g., hydroxyl, amino or isocyanate group); and impregnates the resultant film with a carbon-containing group having a substituent reactive with the above group capable of being bound to the organic structure (B) and structure (C), and also with the proton conducting agent (D) to form the covalent bond among the (A), (B) and (C), to produce the objective proton conducting membrane.

Of the above processes, which by no means limit the process of the present invention, the process 1) is more preferable because of, e.g., its handling simplicity, reliability and investment cost.

The above process 1) or 2) is described in the order of steps to explain, in more detail, the process of the present invention for producing the proton conducting membrane.
The suitable process for producing the proton conductive membrane for the present invention includes the first step, which mixes the organic silicone compound (E) having 2 or more hydrolysable silyl groups and organic silicon compound (F) having 1 or more hydrolysable silyl groups and amino group, both having at least one substituent (e.g., hydrolysable silyl group) capable of forming the three-dimensionally crosslinked structure (A) containing the silicon-oxygen bond, with the proton conducting agent (D) to produce the mixture.

A hydrolysable silyl group is preferable as the substituent capable of forming the three-dimensional crosslinked structure (A) containing a silicon-oxygen bond. The hydrolysable silyl groups useful for the present invention include trialkoxysilyl groups, e.g., trimethoxysilyl, triethoxysilyl, triisopropoxysilyl and triphenoxysilyl; tri-halogenated silyl groups, e.g., tricholorosilyl; those having a dialkoxy or di-halogenated silyl group, e.g., methyldiethoxysilyl, methyldimethoxysilyl, ethyldiethoxysilyl, ethyldimethoxysilyl, methyldichlorosilyl and ethyldichlorosilyl; those having a monoalkoxy or mono-halogenated silyl group, e.g., dimethylethoxysilyl, dimethylmethoxysilyl and dimethylchlorosilyl; and those having a hydroxysilyl group. Various compounds having a hydrolysable silyl group are easily available at low cost from the markets, and it is easy to control the sol-gel process for producing the three-dimensionally crosslinked structure containing a silicon-oxygen bond.

The above compound may be incorporated with a hydrolysable metallic compound which gives another metal oxide (e.g., titanium, zirconium or aluminum oxide). These metallic compounds include carbon-containing compounds having a substituent, e.g., mono-, di- or tri-alkoxide of titanium, zirconium or aluminum, or complex with acetylacetone or the like. Content of the hydrolysable metallic compound other than silicon compound is not limited, but preferably 50% by mol or less on the hydrolysable silyl group for cost and easiness of controlling the reaction.

A hydrolysable inorganic compound may be incorporated as the precursor for the three-dimensionally crosslinked structure containing a silicon-oxygen bond. These inorganic compounds include alkoxysilicates, e.g., tetraethoxysilane, tetramethoxysilane, tetraisopropoxysilane, tetra-n-butoxysilane, tetra-t-butoxysilane, and their monoalkyl and dialkyl derivatives; phenyltriethoxysilane, halogenated silane, tetraethoxy titanate, tetraisopropoxy titanate, tetra-n-butoxy titanate, tetra-t-butoxy titanate, and their monoalkyl and dialkyl derivatives; alkoxy titanate and its oligomers containing a compound, e.g., acetylacetone or the like substituted with a group for controlling crosslinking reaction rate; and alkoxy zirconate.
Content of the hydrolysable inorganic compound is preferably 30% by mol or less on the total weight of the organic silicone compound (E) having 2 or more hydrolysable silyl groups and organic silicon compound (F) having 1 or more hydrolysable silyl groups and amino group. At above 30% by mol, the carbon-containing phase and inorganic phase may not be clearly separated from each other, and high proton conductivity may not be obtained.

The hydrolysable silyl group serves as a precursor for the three-dimensional crosslinked structure (A) containing a silicon-oxygen bond. Therefore, the compound preferably has 2 hydrolysable silyl groups to produce the membrane of higher mechanical strength and proton conductivity. Extent of crosslinking will be insufficient in the membrane subjected to the sol-gel reaction, when the compound has only one hydrolysable silyl group, with the result that the membrane may no longer secure a sufficient proton conductivity, because its strength may be insufficient and the phase-separated structure may be easily broken. Therefore, the compound preferably has 2 or more bonds. Number of the bond is particularly preferably 2, because the compound having 3 or more bonds is difficult to obtain, and increases crosslinking density of the membrane to make it hard and damage its flexibility. It should be noted, however, that number of the bond of (C) with (A) and (B) may be only one, or 2 or more, provided that the compound has a sufficient number of the bonds between (A) and (B), and flexibility and stable conductivity of the membrane are secured.

The proton conducting agent (D) may be selected from the ones described above. In the first step, an adequate solvent may be used. The solvents useful for the present invention include ether-based ones, e.g., propyl ether, n-butyl ether, anisole, tetrahydrofuran, dioxane and ethylene glycol diethyl ether; ester-based ones, e.g., ethyl acetate, butyl acetate and amyl acetate; ketone-based ones, e.g., acetone, methylethylketone, methylisobutylketone and acetophenone; alcohol-based ones, e.g., methanol, ethanol, isopropanol, butanol, 2-methoxyethanol, 2-ethoxyethanol, 2-butoxyethanol, ethylene glycol and propylene glycol; straight-chain siloxane-based ones, e.g., hexamethyl disiloxane, tetramethyl diphenyl disiloxane, octamethyl trisiloxane and decamethyl tetrasiloxane; and cyclosiloxane-based ones, e.g., hexamethyl cyclotrisiloxane, octamethyl cyclotetrasiloxane, heptamethyl vinyl cyclotetrasiloxane and decamethyl cyclopentasiloxane. The solvents are not limited to the above, and any one may be used so long as it is useful for dissolution or mixing the organic material, metal alkoxide and the like.

Ratio of the solvent is not limited, but the content is preferably adjusted to give a solids concentration of 80 to 10% by weight. The first step may use various additives, described above.

Then, the first step mixes the proton conducting agent (D) with the organic silicone compound (E) having 2 or more hydrolysable silyl groups and organic silicon compound (F) having 1 or more hydrolysable silyl groups and amino group, to prepare the precursor solution (reaction system containing the starting mixture for forming the membrane). The solution containing (D) and that containing (E) and (F) may be separately prepared beforehand and then mixed with each other, or these starting materials may be simultaneously mixed to simplify the process.
The proton conducting agent (D) is incorporated preferably at 0.1 to 3 equivalents per equivalent of the totaled organic silicon compounds (E) and (F) having one or more hydrolysable silyl groups. At below 0.1 equivalents, a sufficiently high proton conductivity may not be obtained. At above 3 equivalents, on the other hand, the membrane may be fragile, or the proton conducting agent (D) may be separated from the membrane.

The preferred process of the present invention for producing the proton conducting membrane includes the second step for making a film of the above precursor solution by a known method, e.g., casting or coating. The film-making method is not limited, so long as it can give the uniform film. The film thickness can be optionally controlled at 10µm to 1mm, and adequately selected in consideration of proton conductivity, fuel permeability and mechanical strength of the membrane. The thickness is not limited, but preferable thickness on a dry basis is normally in a range from 30 to 300µm.

The process of the present invention for producing the proton conducting membrane includes the third step which hydrolyzes/condenses the substituent (e.g., hydrolysable silyl group) capable of forming the three-dimensional crosslinked structure (A) containing a silicon-oxygen bond (the so-called sol-gel process), to form the three-dimensional crosslinked structure (A). The third step can produce the objective membrane by the so-called sol-gel process, in which the above film is treated at an optional temperature in a range from room temperature to 300°C. The film may be heated in the third step by a known method, e.g., heating by an oven or autoclave under elevated pressure.

In order to effect the hydrolysis/condensation more efficiently in the third step, the precursor solution may be incorporated beforehand with water (G), or the film may be heated in the presence of steam. Content of water (G), when incorporated, is not limited so long as it does not cause separation of the precursor solution or other problems. Generally, it is preferably incorporated at 0.1 to 50 mol equivalents for the hydrolysable silyl group. The proton conducting agent (D) normally has water of crystallization, and it may be used without intentionally adding water (G). When the sol-gel process is effected in the presence of steam, the system is preferably kept at a relative humidity of 60% or more, particularly preferably in the presence of saturated steam. Thus, the hydrolysis/condensation process proceeds efficiently in the presence of water, either incorporated in the precursor solution as the component (G) or steam, to give the thermally stable membrane.

In order to accelerate formation of the three-dimensionally crosslinked structure, an acid, e.g., hydrochloric, sulfuric or phosphoric acid, may be incorporated as the catalyst beforehand in the reaction system. Formation of the three-dimensionally crosslinked structure is accelerated also in the presence of a base, and hence a basic catalyst (e.g., ammonia) may be used. However, use of an acid is more preferable, because a basic catalyst reacts highly possibly with the proton conducting agent.

It is preferable to effect the third step at 100 to 300°C, or adopt an aging step effected at 100 to 300°C subsequent to the third step for the process of the present invention. The proton conducting membrane of the present invention, when to be used at high temperature of 100°C or higher, is preferably heated at temperature exceeding service temperature. It may be heated directly during the third step which is effected at 100 to 300°C. Or else, the third step is effected at 5 to 40°C for 2 hours or more for curing the membrane by the sol-gel process, and then followed by a step effected at 100 to 300°C. The membrane undergoing the first to third steps may be washed with water, as required, which is preferably free of metallic ion, e.g., distilled or ion-exchanged water. The membrane thus prepared may be further irradiated with ultraviolet ray or electron beams, to further deepen extent of crosslinking.

The proton conducting membrane thus produced is an innovative organic/inorganic composite membrane having unprecedentedly high heat resistance and durability, and high proton conductivity even at elevated temperature, and can be suitably used as the membrane for fuel cells. When the proton conductive membrane of the present invention is used for fuel cells, the so-called membrane/electrode assembly with the membrane joined to the catalyst-carrying electrode is formed. The method for producing the membrane/electrode assembly is not limited: it may be produced by an adequate method, e.g., hot pressing or coating the membrane or electrode with a proton conductive composition.
The proton conducting membrane of the present invention is applicable not only to an electrolyte membrane of PEFCs but also to, e.g., chemical sensors and ion-exchanging membranes.

A catalyst may be used, as required, for production of the three-dimensionally crosslinked structure (A) by hydrolyzing the liquid compound containing an alkoxy group.
The catalysts useful for the present invention include inorganic acids, e.g., hydrochloric, nitric, sulfuric and phosphoric acid; organic acids, e.g., anhydrous acetic, glacial acetic, propionic, citric, benzoic, formic, acetic, oxalic, p-toluenesulfonic acid; chlorosilanes, e.g., methyltrichlorosilane and dimethyldichlorosilane; organic salts, e.g., ethylenediamine, triethanolamine, hexylamine, dodecylamine phosphate, dimethylhydroxyamine and diethylhydroxyamine; metallic salts of organic acids, e.g., iron octoate, iron naphthenate, cobalt octoate, manganese octoate, tin naphthenate and lead octoate; organotin compounds, e.g., dibutyltin diacetate, dibutyltin dioctoate, dibutyltin dilaurate, dibutyltin monooleate, dibutyltin dimethoxide and dibutyltin oxidediacetate; and quaternary ammonium salts, e.g., benzyltriethyl ammonium acetate.

### EXAMPLES

The present invention is described more concretely by EXAMPLES, which by no means limit the present invention. All of the compounds, solvents and the like used in EXAMPLES and COMPARATIVE EXAMPLES were commercial ones. They were used directly, i.e., not treated for these examples. Properties of the proton conducting membrane prepared were evaluated by the analytical methods described below.

### Analytical methods

### (1) Evaluation of membrane properties

The proton conducting membrane was subjected to the bending functional test, and its properties were rated according to the following standards:
○ : The membrane can be bent, and is kept flexible.
× : The membrane cannot be bent.

### (2) Evaluation of proton conductivity at low temperature

The proton conducting membrane of the present invention was coated with carbon paste (Conducting Graphite Paint: LADO RESEARCH INDUSTRIES, INC.) on both sides, to which platinum plates were fast adhered. It was analyzed for its impedance by an electrochemical impedance meter (Solartron 1260) in a frequency range from 0.1 Hz to 100 kHz, to determine its proton conductivity.
In the above analysis, the sample was supported in an electrically insulated closed container, and measured for its proton conductivity at varying temperature in a water vapor atmosphere (95 to 100%RH), where cell temperature was increased from room temperature to 160°C by a temperature controller. Proton conductivity was measured at each temperature level, and the value measured at 60°C is reported in this specification as the representative one. Moreover, the results obtained only at 140°C, or 60 and 160°C are also reported for representative EXAMPLES. For the measurement at 100°C, the measurement tank was pressurized to 5 atms.

### (3) Evaluation of heat resistance

The proton conducting membrane was heated at 140°C for 5 hours in an autoclave in a saturated steam atmosphere. The treated membrane was evaluated for its heat resistance by the visual and bending functional tests, and its heat resistance was rated according to the following standards:
○ : No change is observed before and after the treatment.
× : Embrittlement, disintegration, discoloration or deformation of the treated membrane is observed.

### EXAMPLE 1

A solution of 0.79g of 1,8-bis(triethoxysilyl)octane (Gelest, Inc.) and 0.07g of bis(trimethoxysilylpropyl)amine (Gelest, Inc.) dissolved in 1.5g of isopropyl alcohol was prepared.
Another solution of 0.69g of phosphotungstic acid n -hydrate (Wako Pure Chemical Industries) dissolved in 1.5g of isopropyl alcohol was separately prepared. These solutions were mixed with each other, stirred for several minutes, and poured into a Petri dish of polystyrene (Yamamoto Seisakusho, inner diameter: 8.4cm), where the mixture was left at room temperature (20°C) for 15 hours, and heated at 80°C for 10 hours in a saturated steam atmosphere and at 100°C in an oven, to prepare the transparent, flexible membrane.
It was washed in a flow of water at 60°C for 2 hours, before it was analyzed. The evaluation results are given in Table 1.

### EXAMPLE 2

A membrane was prepared in the same manner as in EXAMPLE 1, except that 0.79g of 1,8-bis(triethoxysilyl)octane (Gelest, Inc.), 0.05g of (trimethoxysilylpropyl)amine (Gelest, Inc.) and 0.68g of phosphotungstic acid n-hydrate (Wako Pure Chemical Industries) were used. The evaluation results are given in Table 1.

### EXAMPLE 3

A membrane was prepared in the same manner as in EXAMPLE 1, except that 0.79g of 1,8-bis(triethoxysilyl)octane (Gelest, Inc.) and 0.07g of bis(trimethoxysilylpropyl)amine (Gelest, Inc.) were dissolved in 1.5g of isopropyl alcohol was prepared, to which 0.40g of 0.1N hydrochloric acid was added. The evaluation results are given in Table 1.

### COMPARATIVE EXAMPLE 1

A membrane was prepared in the same manner as in EXAMPLE 1, except that 0.89g of 1,8-bis(triethoxysilyl)octane (Gelest, Inc.) and 0.20g of 0.1N hydrochloric acid were used. The evaluation results are given in Table 1.

### COMPARATIVE EXAMPLE 2

A membrane was prepared in the same manner as in EXAMPLE 1, except that 0.79g of 1,8-bis(triethoxysilyl)octane (Gelest, Inc.), 0.05g of (trimethoxysilylpropyl)amine (Gelest, Inc.) and 0.20g of 0.1N hydrochloric acid were used. The evaluation results are given in Table 1.

### COMPARATIVE EXAMPLE 3

A membrane was prepared in the same manner as in EXAMPLE 1, except that 0.79g of 1,8-bis(triethoxysilyl)octane (Gelest, Inc.), 0.05g of (trimethoxysilylpropyl)amine (Gelest, Inc.) and 0.20g of 0.1N sodium hydroxide were used. The evaluation results are given in Table 1.

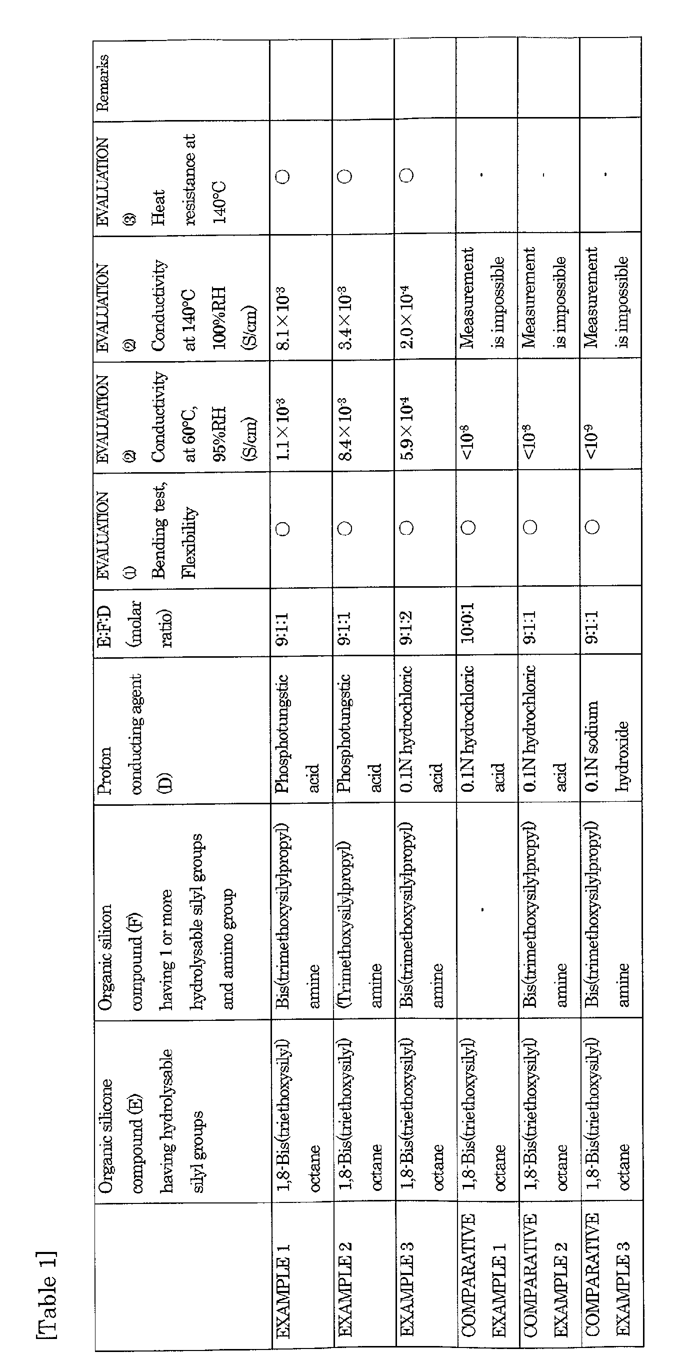

It is apparent from the results shown in Table 1 that each of the proton conducting membranes prepared in EXAMPLES 1 to 3 to have the three-dimensionally crosslinked structure (A) containing the silicon-oxygen bond, organic structure (B), structure (C) containing amino group and proton conducting agent (D) simultaneously satisfies high conductivity and heat resistance.
On the other hand, none of the membranes prepared in COMPARATIVE EXAMPLES, the one free of the structure (C) containing amino group (prepared in COMPARATIVE EXAMPLE 1), the one, although having the structure (C) containing amino group, containing an insufficient quantity of the proton conducting agent (D) (prepared in COMPARATIVE EXAMPLE 2) and the one having a basic curing catalyst in place of the proton conducting agent (D) (prepared in COMPARATIVE EXAMPLE 3), can secure high proton conductivity.

The present invention provides a proton conducting membrane, excellent in resistance to heat, durability, dimensional stability, flexibility, mechanical strength and fuel barrier characteristics to make the membrane serviceable at high temperature by including, as the essential components, the three-dimensionally crosslinked structure (A) containing the silicon-oxygen bond, organic structure (B), structure (C) containing amino group and proton conducting agent (D).
Therefore, the proton conducting membrane of the present invention, when used for polymer electrolyte fuel cells now attracting much attention, allows to increase their operating temperature to 100°C or higher, and is expected to improve power production efficiency and reduce CO poisoning of the catalyst for the cell. Increased operating temperature also can make the fuel cell applicable to cogeneration by utilizing the waste heat, to drastically enhance energy efficiency.

## Claims

1. A proton conducting membrane comprising a three-dimensionally crosslinked structure (A) containing the silicon-oxygen bond, organic structure (B), structure (C) containing amino group and proton conducting agent (D), wherein
(i) the organic structure (B) has at least 2 carbon atoms bonded to each other in the main chain,
(ii) the structure (C) containing amino group has at least one amino group, and
(iii) the three-dimensionally crosslinked structure (A), organic structure (B) and structure (C) containing amino group are bonded to each other via a covalent bond.

2. The proton conducting membrane according to Claim 1, wherein said organic structure (B) and three-dimensionally crosslinked structure (A) are bonded to each other via 2 or more covalent bonds.

3. The proton conducting membrane according to Claim 1, wherein said organic structure (B) consists of carbon and hydrogen.

4. The proton conducting membrane according to Claim 1, wherein the main skeleton section of said organic structure (B) has a structure represented by the chemical formula (1):
-(CH₂)ₙ- (1)
(wherein, "n" is an integer of 2 to 20).

5. The proton conducting membrane according to Claim 1, wherein the main skeleton section of said organic structure (B) has a structure represented by the chemical formula (2):
-(CH₂)ₘ-{Ar}-(CH₂)ₘ- (2)
(wherein, "m" is an integer of 0 to 10; and Ar is an arylene structure of 6 to 30 carbon atoms).

6. The proton conducting membrane according to Claim 1, wherein said structure (C) containing amino group and three-dimensionally crosslinked structure (A) are bonded to each other via 1 or more covalent bonds.

7. The proton conducting membrane according to Claim 1, wherein the main skeleton section of said structure (C) containing amino group has a hydrocarbon structure with at least one amino group and the other portion consisting of carbon and hydrogen.

8. The proton conducting membrane according to Claim 1, wherein said structure (C) containing amino group has at least one structure selected from the group consisting of those represented by the chemical formulae (3) and (4):
- (CH₂)ₐ-(NH-(CH₂)_{b})_{c}-NH-(CH₂)ₐ- (3)
(wherein, "a" is an integer of 1 to 12; "b" is an integer of 1 to 12; and "c" is an integer of 0 to 5), and
-(CH₂)ₐ-(NH-(CH₂)_{b})_{c}-NR¹R² (4)
(wherein, "a" is an integer of 1 to 12; "b" is an integer of 1 to 12; "c" is an integer of 0 to 5; and R¹ and R² are each selected from the group consisting of hydrogen atom, an alkyl group of 1 to 12 carbon atoms and aryl group of 1 to 12 carbon atoms).

9. The proton conducting membrane according to Claim 1, wherein said proton conducting agent (D) is an acid.

10. The proton conducting membrane according to Claim 9, wherein said acid is a heteropolyacid.

11. The proton conducting membrane according to Claim 10, wherein said heteropolyacid is at least one type of compound selected from the group consisting of phosphotungstic acid, phosphomolybdic acid and silicotungstic acid.

12. The proton conducting membrane according to Claim 1, wherein said structure (C) containing amino group is incorporated at 0.01 to 1 equivalent per equivalent of said organic structure (B).

13. The proton conducting membrane according to Claim 1, wherein said proton conducting agent (D) is incorporated at 0.01 to 3 equivalents per equivalent of said three-dimensionally crosslinked structure (A), organic structure (B) and structure (C) containing amino group totaled, and at least per equivalent of said structure (C) containing amino group.

14. A method for producing the proton conducting membrane of one of Claims 1 to 13, comprising steps of preparing a mixture of an organic silicone compound (E) having 2 or more hydrolysable silyl groups, organic silicon compound (F) having 1 or more hydrolysable silyl groups and amino group, and proton conducting agent (D) as the first step; forming the above mixture into a film as the second step; and hydrolyzing/condensing the hydrolysable silyl group contained in the mixture formed into the film, to form the three-dimensionally crosslinked structure having the silicon-oxygen bond as the third step.

15. The method according to Claim 14 for producing the proton conducting membrane, wherein said organic silicone compound (E) having 2 or more hydrolysable silyl groups is a compound represented by the chemical formula (5): 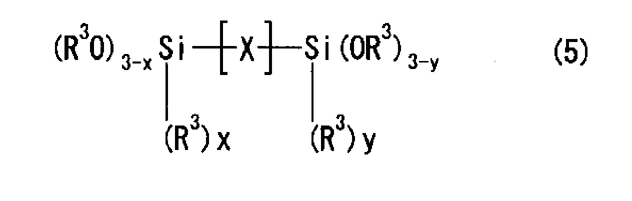 (wherein, R³ is a group selected from the group consisting of methyl, ethyl, propyl and phenyl, R³s being the same or different; X is a group represented by the chemical formula (1) or (2), Xs being the same or different; and "x" and "y" are each 0 or 1, and may be the same or different).

16. The method according to Claim 14 for producing the proton conducting membrane, wherein said organic silicon compound (F) having 1 or more hydrolysable silyl groups and amino group is at least one compound selected from those represented by the chemical formulae (6) and (7): 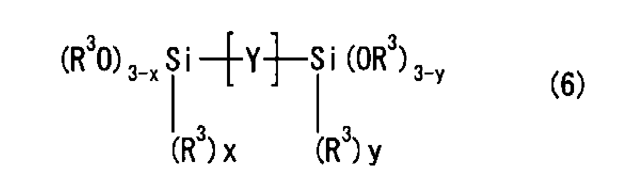 (wherein, R³ is a group selected from the group consisting of methyl, ethyl, propyl and phenyl, R³s being the same or different; Y is a group represented by the chemical formula (3); and "x" and "y" are each 0 or 1, and may be the same or different), 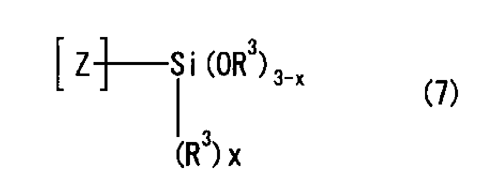 (wherein, R³ is a group selected from the group consisting of methyl, ethyl, propyl and phenyl, R³s being the same or different; Z is a group represented by the chemical formula (4); and "x" is 0 or 1).

17. The method according to Claim 14 for producing the proton conducting membrane, wherein said mixture is incorporated with water (G).

18. The method according to Claim 14 for producing the proton conducting membrane, wherein said third step is followed by a new step as the fourth step in which the mixture formed into a film is cured at 100 to 300°C.

19. A fuel cell which uses the proton conducting membrane of one of Claims 1 to 13.
